(19) **Europäisches Patentamt**

**European Patent Office**

**Office européen des brevets**

(11) **EP 0 532 124 B1**

(12) **EUROPEAN PATENT SPECIFICATION**

(45) Date of publication and mention
of the grant of the patent:
**17.12.1997 Bulletin 1997/51**

(51) Int Cl.$^6$: **C08G 67/02**

(21) Application number: **92202788.3**

(22) Date of filing: **11.09.1992**

(54) **Polymer separation**

Polymertrennung

Séparation de polymères

(84) Designated Contracting States:
**BE CH DE ES FR GB IT LI NL SE**

(30) Priority: **13.09.1991 NL 9101549**

(43) Date of publication of application:
**17.03.1993 Bulletin 1993/11**

(73) Proprietor: **SHELL INTERNATIONALE
RESEARCH MAATSCHAPPIJ B.V.
2596 HR Den Haag (NL)**

(72) Inventor: **Keijsper, Johannes Jacobus
NL-1031 CM Amsterdam (NL)**

(56) References cited:
**EP-A- 0 228 733**       **EP-A- 0 393 790**

## Description

The invention relates to a process for the separation of polymers of carbon monoxide with one or more α-olefins.

Linear polymers of carbon monoxide with ethene and/or propene and optionally in addition with one or more other α-olefins in which polymers the units from carbon monoxide on the one hand and the units from the olefins on the other hand are present in a substantially alternating arrangement can be prepared by contacting the monomers with a catalyst composition containing a Group VIII metal and a phosphorus bidentate ligand of the general formula $R_1R_2P-R-PR_3R_4$ in which $R_1$ to $R_4$ represent identical or different alkyl groups in which alkyl groups the carbon atom that occurs linked to phosphorus carries at least two hydrogen atoms and R is a divalent organic bridging group containing at least two carbon atoms in the bridge connecting the two phosphorus atoms to each other. Using these catalyst compositions, linear alternating polymers are obtained with an average molecular weight, calculated as number average ($\overline{M}_n$), of more than 10,000. For some applications there is a need for such polymers with a considerably lower $\overline{M}_n$. These polymers can be used as such or can serve as starting material for the preparation of other valuable polymers by conversion of at least a part of the carbonyl groups present in the polymers as functional groups into other functional groups.

The applicant recently carried out an investigation into the preparation of the present polymers with a low $\overline{M}_n$. In the course of this investigation is was found that when using the above-mentioned catalyst compositions, polymers with a $\overline{M}_n$ of less than 2500 can be prepared in a high yield by carrying out the polymerization in the presence of hydrogen. It was further found that by using catalyst compositions containing a Group VIII metal and a tetraalkyldiphosphine, the desired polymers with an $\overline{M}_n$ of less than 2500 can also be prepared in the absence of hydrogen, provided that a diphosphine of the general formula $R_5R_6P-R-PR_7R_8$ is used in which $R_5$ to $R_8$ represent identical or different alkyl groups in which alkyl groups the carbon atom that occurs linked to phosphorus carries only one hydrogen atom and R has the previously indicated meaning. Use of these catalyst compositions also enables polymers with an $\overline{M}_n$ of less than 2500 to be prepared in a high yield.

The polymers with an $\overline{M}_n$ of less than 2500 prepared as described above have a relatively wide molecular weight distribution. For some applications there is a need for such polymers with a narrower molecular weight distribution.

In the course of continued research by the applicant into the present polymers with an $\overline{M}_n$ of less than 2500 it has now surprisingly been found that these polymers can be separated by treatment with certain liquids into a soluble fraction with an $\overline{M}_n$ which is lower than that of the polymers which were subjected to the treatment and an insoluble fraction with an $\overline{M}_n$ which is higher than that of the polymers which were subjected to the treatment. The polymer fractions thus obtained each have a molecular weight distribution which is narrower that that of the polymers which were subjected to the treatment. To achieve the desired separation, the liquid used should have a dielectric constant with a value of between 2 and 10 at 20°C.

The patent application therefore relates to a process for the separation of polymers wherein linear polymers of carbon monoxide with ethene and/or propene and optionally in addition with one or more other α-olefins, in which polymers the units from carbon monoxide on the one hand and the units from the olefins on the other hand are present in a substantially alternating arrangement and which polymers have an $\overline{M}_n$ of less than 2500, are separated by treatment with a liquid having at 20°C a dielectric constant of between 2 and 10 into a soluble fraction with an $\overline{M}_n$ which is lower than that of the polymers which were subjected to the treatment and an insoluble fraction with an $\overline{M}_n$ which is higher than that of the polymers which were subjected to the treatment. The patent application further relates to the polymer fractions obtained from this separation and to shaped objects consisting at least partly of these polymer fractions.

In the process according to the invention the polymers are treated with a liquid having at 20°C a dielectric constant of between 2 and 10. There is preference for liquids which at 20°C have a dielectric constant of between 2.5 and 8. Examples of suitable liquids are dialkylethers such as dimethylether, diethylether and diisopropylether with a dielectric constant at 20° of 5,0, 4.3 and 3.9 respectively. The higher the dielectric constant of the liquids at 20°C, the more of the polymers to be treated will dissolve in them. Lower aliphatic alcohols such as methanol and ethanol with a dielectric constant at 20°C of 33 and 24 respectively are unsuitable for the present purpose, since the polymers dissolve therein almost completely. Lower aliphatic hydrocarbons such as n-pentane with a dielectric constant at 20°C of 1.8 are also unsuitable for the present purpose, since the polymers are almost completely insoluble therein. Very favourable results were obtained by using diethylether and diisopropylether as treatment liquids.

Depending on the chosen treatment conditions, more or less of the polymers will dissolve in a given liquid. For example, in general more of the polymers will enter into solution the longer the treatment time, the higher the treatment temperature and the greater the quantity of liquid used per unit weight of polymer. The treatment according to the invention can be carried out at room temperature as well as at higher temperatures. If desired, the treatment can be carried out at the boiling point of the liquid or at an even higher temperature by carrying out the treatment under pressure. In the process according to the invention, short treatment times of a few minutes as well as longer treatment times of some hours are eligible. In the process a small quantity of liquid such as 1 ml per g polymer as well as a larger quantity of liquid such as 1 1 per g polymer can be used. Favourable results can be obtained according to the invention by treating the polymers for about 1 hour at room temperature under stirring with about 10 ml liquid per g polymer.

As was mentioned above, polymers which are eligible for use as starting material for the process according to the invention can be prepared by contacting the monomers in the presence of hydrogen with a catalyst composition containing a Group VIII metal and a phosphorus bidentate ligand of the general formula $R_1R_2P$-$R$-$PR_3R_4$. This polymerization is preferably carried out at a hydrogen partial pressure of between 1 and 50 bar and in particular between 2 and 40 bar. An additional reduction of the average molecular weight can be achieved in this polymerization by carrying out the polymerization additionally in the presence of a compound of the general formula $CH_2=C(R_9)$-$C(=0)X$ where $R_9$ represents hydrogen or an alkyl group and X is a hydroxyl group, an alkoxy group or an optionally alkyl substituted amino group. A very suitable compound for this purpose is methylacrylate.

As was also mentioned above, polymers which are eligible for use as starting material for the process according to the invention can also be prepared in the absence of hydrogen by contacting the monomers with a catalyst composition containing a Group VIII metal and a phosphorus bidentate ligand of the general formula $R_5R_6P$-$R$-$PR_7R_8$.

In this patent application, Group VIII metals are understood to be the noble metals ruthenium, rhodium, palladium, osmium, iridium and platinum, as well as the iron group metals iron, cobalt and nickel. In the catalyst compositions the Group VIII metal is preferably selected from palladium, nickel and cobalt. Palladium is particularly preferred as Group VIII metal. The incorporation of the Group VIII metal in the catalyst compositions preferably takes place in the form of a salt of a carboxylic acid, in particular in the form of an acetate.

In the phosphorus bidentate ligands which are eligible for use in the catalyst compositions, the alkyl groups $R_1$ to $R_8$ preferably each contain not more than 6 carbon atoms. There is also preference for phosphorus bidentate ligands in which the groups $R_1$ to $R_4$ are the same as one another and the groups $R_5$ to $R_8$ are the same as one another. Examples of suitable groups $R_1$ to $R_4$ are the methyl, the ethyl, the n-propyl and the n-butyl groups. Examples of suitable groups $R_5$ to $R_8$ are the 2-propyl, the 2-butyl and the 2-pentyl groups. As regards the bridging group R present in the phosphorus bidentate ligands, there is preference for bridging groups containing three atoms in the bridge, of which at least two are carbon atoms. Examples of suitable bridging groups R are the -$CH_2$-$CH_2$-$CH_2$- group, the -$CH_2$-$C(CH_3)_2$-$CH_2$- group and the -$CH_2$-$Si(CH_3)_2$-$CH_2$- group. As a very suitable phosphorus bidentate ligand of the general formula $R_1R_2P$-$R$-$PR_3R_4$ can be mentioned 1,3-bis(di n-butylphosphino)propane. As very suitable phosphorus bidentate ligands of the general formula $R_5R_6P$-$R$-$PR_7R_8$ can be mentioned 1,3-bis(di 2-propylphosphino)propane and 1,3-bis(di 2-butylphosphino)propane. The phosphorus bidentate ligands in the catalyst compositions are preferably used in a quantity of 0.5-2 and in particular 0.75-1.5 mol per g.atom Group VIII metal.

In addition to a Group VIII metal and a phosphorus bidentate ligand, the catalyst compositions used in the polymer preparation preferably also contain an anion of an acid with a pKa of less than 4 and in particular an anion of an acid with a pKa of less than 2. Examples of acids with a pKa of less than 2 are mineral acids such as perchloric acid, sulphonic acids such as para-toluenesulphonic acid and trifluoromethanesulphonic acid, and halocarboxylic acids such as trifluoroacetic acid. The incorporation of the anion of an acid with a pKa of less than 4 in the catalyst composition can take place in the form of an acid and/or in the form of a salt. A nickel salt such as nickel perchlorate is very suitable as a salt. The anion is preferably present in the catalyst compositions in a quantity of 1-100 and in particular 2-50 mol per g.atom Group VIII metal.

In addition to a Group VIII metal, a phosphorus bidentate ligand and optionally an anion of an acid with a pKa of less than 4, the catalyst compositions which are eligible for use in the polymer preparation preferably also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-quinones are preferred, and in particular 1,4-benzoquinone and 1,4-naphthoquinone. The organic oxidizing agent is preferably present in the catalyst compositions in a quantity of 5-5000 and in particular 10-1000 mol per g.atom Group VIII metal.

If the process according to the invention is employed for the separation of polymers of carbon monoxide with ethene and/or propene and also with one or more other α-olefins, said α-olefins preferably contain fewer than 10 carbon atoms per molecule. The process according to the invention is particularly important for the separation of polymers of carbon monoxide with ethene and/or propene.

The preparation of the polymers according to the invention is preferably carried out in the presence of a liquid diluent. Polar liquids are preferably used as diluents. These liquids can be protic or aprotic. An example of a suitable protic liquid is methanol. Examples of suitable aprotic liquids are acetone and tetrahydrofuran. If desired, the polymerization can also be carried out in the gas phase. The polymer preparation can be carried out either batchwise or continuously.

In the preparation of linear alternating polymers of carbon monoxide with propene and optionally also with one or more other α-olefins using catalyst compositions containing a Group VIII metal and a tetraalkyldiphosphine, polymers are obtained in which some of the units from carbon monoxide are present in optionally 3-alkyl-substituted 2,5-furandiyl groups. This furan formation can be effectively supressed by carrying out the polymerization in the presence of a liquid diluent consisting substantially of one or more of the α-olefins used as monomers with three or more carbon atoms per molecule. It was, incidentally, found in the course of the applicant's investigation that led to the present invention that polymer molecules in which the above-mentioned furan structures occur dissolve, in the process according to the invention, preferentially in the applied treatment liquid. Consequently, if these structures are present in the starting material, of the two polymer fractions obtained, the fraction with the higher average molecular weight will exhibit a sharply reduced degree of furanization.

The quantity of catalyst composition used in the preparation of the polymers can vary within wide limits. Per mol olefinically unsaturated compound to be polymerized a quantity of catalyst composition is preferably used which contains $10^{-7}$-$10^{-3}$ and in particular $10^{-6}$-$10^{-4}$ g.atom Group VIII metal.

The preparation of the polymers is preferably carried out at a temperature of 20-150°C and a pressure of 2-150 bar and in particular at a temperature of 30-130°C and a pressure of 5-100 bar. The molar ratio of the olefinically unsaturated compounds relative to carbon monoxide is preferably 10:1-1:10 and in particular 5:1-1:5.

The invention will now be illustrated with reference to the following examples:

Example 1

A carbon monoxide/propene copolymer was prepared as follows. 200 ml propene was introduced into a stirred autoclave with a volume of 300 ml. After the autoclave contents had been brought to 80°C, carbon monoxide was forced in until a pressure of 55 bar was reached and then hydrogen until a pressure of 58 bar was reached. A catalyst solution was then introduced into the autoclave consisting of:

4 ml acetone,
0.02 mmol palladium acetate,
0.1 mmol nickel perchlorate, and
0.024 mmol 1,3-bis(di n-butylphosphino)propane.

During the polymerization the pressure was kept constant by forcing in carbon monoxide. After 16 hours the polymerization was terminated by cooling the reaction mixture to room temperature and releasing the pressure. The polymer was isolated by evaporating down the reaction mixture. 5.7 g copolymer was obtained with an $\overline{M}_n$ of 1140. The degree of furanization was less than 5%.

Example 2

1 g of the carbon monoxide/propene copolymer prepared according to example 1 was mixed with 10 ml diethylether and the mixture was stirred for 1 hour at room temperature. The mixture was separated by filtration into a residue that, after drying, produced 0.25 g copolymer with an $\overline{M}_n$ of 1525 and a filtrate that, after evaporating down, produced 0.75 g copolymer with an $\overline{M}_n$ of 1010.

Example 3

1 g of the carbon monoxide/propene copolymer prepared according to example 1 was mixed with 10 ml diisopropylether and the mixture was stirred for 1 hour at room temperature. The mixture was separated by filtration into a residue that, after drying, produced 0.50 g copolymer with an $\overline{M}_n$ of 1500 and a filtrate that, after evaporating down, produced 0.50 g copolymer with an $\overline{M}_n$ of 840.

Of the examples 1-3, examples 2 and 3 are according to the invention. In these examples a carbon monoxide/propene copolymer with an $\overline{M}_n$ of less than 2500 was separated by treatment with a liquid, which at 20°C had a dielectric constant of between 2 and 10, into a polymer fraction with a higher $\overline{M}_n$ and a polymer fraction with a lower $\overline{M}_n$. Example 1 falls outside the scope of the invention and has been included in the patent application for comparison. Example 1 relates to the preparation of the copolymer used as starting material for the treatment.

The degree of furanization is understood in this patent application as being the number of units from carbon monoxide present in optionally 3-alkyl-substituted 2,5-furandiyl groups as a percentage of the total number of units from carbon monoxide that are present in the polymers. The degree of furanization was determined with the aid of NMR analysis. It was also established by NMR analysis that the polymers prepared according to example 1 were built up from linear chains in which the units from carbon monoxide on the one hand and the units from propene on the other hand occurred in an alternating arrangement.

**Claims**

1. Process for the separation of polymers, characterized in that linear polymers of carbon monoxide with ethene and/or propene and optionally in addition with one or more other α-olefins, in which polymers the units from carbon monoxide on the one hand and the units from the olefins on the other hand are present in a substantially alternating arrangement and which polymers have an $\overline{M}_n$ of less than 2500, are separated by treatment with a liquid which at 20°C has a dielectric constant of between 2 and 10 into a soluble fraction with an $\overline{M}_n$ which is lower than that of the polymers which were subjected to the treatment and an insoluble fraction with an $\overline{M}_n$ which is higher than that of the polymers which were subjected to the treatment.

2. Process according to claim 1, characterized in that at 20°C the treatment liquid has a dielectric constant of between 2.5 and 8.

3. Process according to claim 1 or 2, characterized in that as treatment liquid a dialkylether such as diethylether or diisopropylether is used.

4. Process according to one or more of claims 1-3, characterized in that the treatment is carried out by stirring the polymers for about 1 hour at room temperature with about 10 ml of the treatment liquid per g polymer.

5. Process according to one or more of claims 1-4, characterized in that the polymers have been prepared by contacting the monomers in the presence of hydrogen with a catalyst composition containing a Group VIII metal and a phosphorus bidentate ligand of the general formula $R_1R_2P$-$R$-$PR_3R_4$ in which $R_1$ to $R_4$ represent identical or different alkyl groups in which alkyl groups the carbon atom that occurs linked to phosphorus carries at least two hydrogen atoms and R is a divalent organic bridging group containing at least two carbon atoms in the bridge connecting the two phosphorus atoms to each other.

6. Process according to claims 5, characterized in that the polymerization is carried out in the presence of a compound of the general formula $CH_2$=$C(R_9)$-$C$(=0)X where $R_9$ represents hydrogen or an alkyl group and X is a hydroxyl group, an alkoxy group or an optionally alkyl substituted amino group preferably methylacrylate.

7. Process according to one or more of claims 1-4, characterized in that the polymers are prepared by contacting the monomers in the absence of hydrogen with a catalyst composition containing a Group VIII metal and a phosphorus bidentate ligand of the general formula $R_5R_6P$-$R$-$PR_7R_8$ in which $R_5$ to $R_8$ represent identical or different alkyl groups in which alkyl groups the carbon atom that occurs linked to phosphorus carries only one hydrogen atom and R has the meaning indicated in claim 5.

8. Process according to claim 5 or 7, characterized in that as phosphorus bidentate ligand the catalyst composition contains 1,3-bis(di n-butylphosphino) propane, 1,3-bis(di 2-propylphosphino) propane or 1,3-bis(di 2-butylphosphino)propane.

9. Process according to one or more of claims 5-8, characterized in that the polymerization is carried out at a temperature of 20-150°C, a pressure of 2-150 bar and a molar ratio of the olefinically unsaturated compounds relative to carbon monoxide of 10:1-1:10 and using a quantity of catalyst composition which contains $10^{-7}$-$10^{-3}$ g.atom Group VIII metal per mol olefinically unsaturated compound to be polymerized.

10. Process according to one or more of claims 1-9, characterized in that it is applied for the separation of polymers of carbon monoxide with ethene and/or propene.

**Patentansprüche**

1. Verfahren zur Auftrennung von Polymeren, dadurch gekennzeichnet, daß lineare Polymere aus Kohlenmonoxid mit Ethen und/oder Propen und gegebenenfalls zusätzlich mit einem oder mit mehreren anderen α-Olefinen, in welchen Polymeren die Einheiten aus Kohlenmonoxid einerseits und die Einheiten aus den Olefinen anderseits in einer im wesentlichen alcernierenden Anordnung vorliegen und welche Polymere ein $\overline{M}_n$ von weniger als 2500 aufweisen, durch Behandlung mit einer Flüssigkeit, die bei 20°C eine Dielektrizitätskonstante zwischen 2 und 10 aufweist, in eine lösliche Fraktion mit einem $\overline{M}_n$, das niedriger liegt als dasjenige der Polymere, die der Behandlung unterzogen wurden, und in eine unlösliche Fraktion mit einem $\overline{M}_n$, das höher liegt als dasjenige der Polymere, die der Behandlung unterzogen wurden, aufgetrennt werden.

2. Verfahren nach Anspruch 1, dadurch gekennzeichnet, daß die Behandlungsflüssigkeit bei 20°C eine Dielektrizitätskonstante zwischen 2,5 und 8 aufweist.

3. Verfahren nach Anspruch 1 oder 2, dadurch gekennzeichnet, daß als Behandlungsflüssigkeit ein Dialkylether wie Diethylether oder Diisopropylether verwendet wird.

4. Verfahren nach einem oder mehreren der Ansprüche 1-3, dadurch gekennzeichnet, daß die Behandlung durch Rühren der Polymere während etwa 1 Stunde bei Raumtemperatur mit etwa 10 ml Behandlungsflüssigkeit je g Polymer ausgeführt wird.

5. Verfahren nach einem oder mehreren der Ansprüche 1-4, dadurch gekennzeichnet, daß die Polymere durch Inkontaktbringen der Monomere in Anwesenheit von Wasserstoff mit einer Katalysatorzusammensetzung mit einem Gehalt an einem Gruppe VIII-Metall und einem Phosphorbidentatligan-

den der allgemeinen Formel $R_1R_2P$-R-$PR_3R_4$ hergestellt worden sind, in welcher Formel $R_1$ bis $R_4$ gleiche oder verschiedene Alkylgruppen bedeuten, in welchen Alkylgruppen das an Phosphor gebundene Kohlenstoffatom wenigstens zwei Wasserstoffatome trägt, und worin R eine zweiwertige organische Brückengruppe bedeutet, die wenigstens zwei Kohlenstoffatome in der Brücke enthält, die die beiden Phosphoratome miteinander verbindet.

6. Verfahren nach Anspruch 5, dadurch gekennzeichnet, daß die Polymerisation in Anwesenheit einer Verbindung der allgemeinen Formel $CH_2$=C($R_9$)-C(=0)X ausgeführt wird, worin $R_9$ für Wasserstoff oder eine Alkylgruppe steht und X eine Hydroxylgruppe, eine Alkoxygruppe oder eine gegebenenfalls alkylsubstituierte Aminogruppe bedeutet, vorzugsweise in Gegenwart von Methylacrylat.

7. Verfahren nach einem oder mehreren der Ansprüche 1-4, dadurch gekennzeichnet, daß die Polymere durch Inkontaktbringen der Monomere in Abwesenheit von Wasserstoff mit einer Katalysatorzusammensetzung mit einem Gehalt an einem Gruppe VIII-Metall und einem Phosphorbidentatliganden der allgemeinen Formel $R_5R_6P$-R-$PR_7R_8$ hergestellt werden, worin $R_5$ bis $R_8$ gleiche oder verschiedene Alkylgruppen darstellen, in welchen Alkylgruppen das an Phosphor gebundene Kohlenstoffatom nur ein Wasserstoffatom trägt und worin R die in Anspruch 5 angegebene Bedeutung aufweist.

8. Verfahren nach Anspruch 5 oder 7, dadurch gekennzeichnet, daß die Katalysatorzusammensetzung als Phosphorbidentatligand 1,3-Bis(di-n-butylphosphino)propan, 1,3-Bis(di-2-propylphosphino)propan oder 1,3-Bis (di-2-butylphosphino)propan enthält.

9. Verfahren nach einem oder mehreren der Ansprüche 5-8, dadurch gekennzeichnet, daß die Polymerisation bei einer Temperatur von 20-150°C, einem Druck von 2-150 bar und einem Molverhältnis der olefinisch ungesättigten Verbindungen zu Kohlenmonoxid von 10:1 bis 1:10 und unter Anwendung einer Menge an Katalysatorzusammensetzung ausgeführt wird, die $10^{-7}$ bis $10^{-3}$ gAtom Gruppe VIII-Metall je Mol olefinisch ungesättigter, zu polymerisierender Verbindung enthält.

10. Verfahren nach einem oder mehreren der Ansprüche 1-9, dadurch gekennzeichnet, daß es auf die Auftrennung von Polymeren aus Kohlenmonoxid mit Ethen und/oder Propen angewendet wird.

**Revendications**

1. Procédé de séparation de polymères, conformément auquel des polymères linéaires du monoxyde de carbone et de l'éthène et/ou du propène et, éventuellement, en outre, d'une ou plusieurs autres $\alpha$-oléfines, polymères dans lesquels les unités tirant leur origine du monoxyde de carbone, d'une part et les unités tirant leur origine des oléfines, d'autre part, sont présentes en un agencement sensiblement alternant et lesquels polymères possèdent un $\overline{M}_n$ inférieur à 2500, sont séparés par traitement par un liquide possédant, à 20°C, une constante diélectrique comprise entre 2 et 10, en une fraction soluble avec un $\overline{M}_n$ qui est inférieur à celui des polymères qui furent soumis au traitement et une fraction insoluble avec un $\overline{M}_n$ qui est supérieur à celui des polymères qui furent soumis au traitement.

2. Procédé suivant la revendication 1, caractérisé en ce que le liquide de traitement possède, à 20°C, une constante diélectrique comprise entre 2,5 et 8.

3. Procédé suivant la revendication 1 ou 2, caractérisé en ce que l'on utilise un éther dialkylique, comme l'éther diéthylique ou l'éther diisopropylique, à titre de liquide de traitement.

4. Procédé suivant une ou plusieurs des revendications 1 à 3, caractérisé en ce que l'on entreprend le traitement en agitant les polymères à la température ambiante, pendant environ 1 heure avec environ 10 ml du liquide de traitement par g de polymère.

5. Procédé suivant une ou plusieurs des revendications 1 à 4, caractérisé en ce que les polymères ont été préparés par la mise en contact des monomères en présence d'hydrogène avec une composition catalytique qui contient un métal du groupe VIII et un ligand bidentate du phosphore de la formule générale $R_1R_2P$-R-$PR_3R_4$, dans laquelle les symboles $R_1$ à $R_4$ représentent des radicaux alkyle identiques ou différents, dans lesquels radicaux alkyle, l'atome de carbone qui est lié au phosphore porte au moins deux atomes d'hydrogène et R est un groupe de pontage organique bivalent contenant au moins deux atomes dans le pont reliant mutuellement les deux atomes de phosphore.

6. Procédé suivant la revendication 5, caractérisé en ce que l'on entreprend la polymérisation en présence d'un composé de la formule générale $CH2$=C($R_9$)-C(=O)X, dans laquelle $R_9$ représente un atome d'hydrogène ou un radical alkyle et X représente un groupe hydroxyle, un groupe alcoxy, ou un groupe amino, à substitution alkylique éventuelle, de préférence, l'acrylate de méthyle.

7. Procédé suivant une ou plusieurs des revendications 1 à 4, caractérisé en ce que les polymères ont été préparés par la mise en contact des monomères en l'absence d'hydrogène avec une composition catalytique contenant un métal du groupe VIII et un ligand bidentate du phosphore de la formule générale $R_5R_6P-R-PR_7R_8$, dans laquelle les symboles $R_5$ à $R_8$ représentent des radicaux alkyle identiques ou différents dans lesquels radicaux alkyle, l'atome de carbone qui est lié au phosphore ne porte seulement qu'un atome d'hydrogène et R possède les significations qui lui ont été attribuées dans la revendication 5.

8. Procédé suivant la revendication 5 ou 7, caractérisé en ce que la composition catalytique contient du 1,3-bis(di-n-butylphosphino)propane, du 1,3-bis(di-2-propylphosphino)propane ou du 1,3-bis(di-2-butylphosphino)propane, à titre de ligand bidentate du phosphore.

9. Procédé suivant une ou plusieurs des revendications 5 à 8, caractérisé en ce que l'on entreprend la polymérisation à une température de 20 à 150°C, sous une pression de 2 à 150 bars et avec un rapport molaire des composés oléfiniquement insaturés, par rapport au monoxyde de carbone de 10:1 à 1:10 et en utilisant une quantité de composition catalytique qui contient $10^{-7}$-$10^{-3}$ atome-gramme de métal du groupe VIII par mole de composé oléfiniquement insaturé à polymériser.

10. Procédé suivant une ou plusieurs des revendications 1 à 9, caractérisé en ce qu'on l'applique à la séparation de polymères du monoxyde de carbone et de l'éthène et/ou du propène.